# EUROPEAN PATENT SPECIFICATION

(11) **EP 3 726 159 B1**
(45) Date of publication and mention of the grant of the patent: **03.07.2024**
(21) Application number: 18904249.2
(22) Date of filing: 09.11.2018
(51) Int. Cl.: F24F 11/33, F24F 11/52, F24F 11/64, G08B 17/10, F24F 11/526, F24F 110/50

(54) **METHOD EMPLOYING AIR CONDITIONER FOR REPORTING FIRE, AND AIR CONDITIONER**
VERFAHREN ZUM EINSETZEN EINER KLIMAANLAGE ZUR BRANDMELDUNG UND KLIMAANLAGE
PROCÉDÉ UTILISANT UN CLIMATISEUR POUR SIGNALER UN INCENDIE ET CLIMATISEUR ASSOCIÉ

(30) Priority: 31.01.2018 CN 201810094807
(43) Date of publication of application: 21.10.2020
(73) Proprietor: Qingdao Haier Air Conditioner General Corp., Ltd., Qingdao, Shandong 266101 (CN); Haier Smart Home Co., Ltd., Qingdao, Shandong 266101 (CN)
(72) Inventor: YANG, Qing, Qingdao Shandong 266101 (CN); LI, Haijun, Qingdao Shandong 266101 (CN); KANG, Lijun, Qingdao Shandong 266101 (CN)
(74) Representative: dompatent von Kreisler Selting Werner - Partnerschaft von Patent- und Rechtsanwälten mbB
(86) International application number: PCT/CN2018/114700
(87) International publication number: WO 2019/148929

(56) References cited:
- WO-A2-2008/150098
- CN-A- 104 501 363
- CN-A- 104 501 363
- CN-A- 107 631 427
- CN-A- 108 386 955
- CN-U- 202 394 332
- CN-U- 202 394 332
- GB-A- 2 401 468
- US-B1- 8 988 232

## Description

### TECHNICAL FIELD

The present invention relates to the field of air conditioner technologies, and more particularly, to a method for fire alarm by using an air conditioner and an air conditioner.

### BACKGROUND

With the improvement of people's living standards, air conditioners have become an indispensable configuration in homes, offices, schools, units, hotels and other places. Many residents with strong fire prevention awareness have installed fire alarms at home. However, the fire alarms are usually installed on indoor ceilings alone. If a fire alarm function is combined with the air conditioners, the benefit for a user is obvious, that is, the user only needs to purchase the air conditioners.

The prior art discloses an air conditioner with smoke alarm function, the air conditioner includes an outdoor unit and an indoor unit, wherein the indoor unit is provided with a smoke alarm including a buzzer and a smoke sensor; the air conditioner further includes a transformer, a storage battery, a control module and a control switch, wherein the control module, the transformer, the storage battery and the control switch are connected to the buzzer respectively.

The prior art also discloses an air conditioning system for smoke alarm and anti-theft alarm, the air conditioning system includes a single-chip processor, a smoke alarm module, a temperature detection module, an anti-theft alarm module, a communication module and a high-power relay connected in series in circuits of the air conditioning system, wherein the high-power relay is connected to the single-chip processor, the anti-theft alarm module includes an infrared switch and a power conversion module, wherein the infrared switch and the power conversion module are connected in series and connected in parallel in the circuit of the air conditioning system, signal output ends of the infrared switch and the power conversion module are respectively connected to a signal collection end of the single-chip processor, the smoke alarm module and the temperature detection module are respectively connected to the single-chip processor, and the single-chip processor is connected to a user side through the communication module.

Document GB 2 401 468 A discloses a method for fire alarm by using an air conditioner, comprising: detecting smoke concentration in a space where an indoor unit of the air conditioner is located ; when a second specified condition is satisfied, controlling the air conditioner to start a second mode to perform an alarm prompt; and when a first specified condition is satisfied, controlling the air conditioner to start a first mode to perform a warning. It also discloses an apparatus for carrying out said method.

All the above solutions have the function of the fire alarm, however, alarm modes are not distinguished according to the severity of the fire.

### SUMMARY

The present invention provides a method according to claim 1 and an air conditioner according to claim 2. In order to have a basic understanding of some aspects of the invention, a brief summary of these aspects is given below. The summary serves as a preamble to the following detailed description.

According to a first aspect of the invention, there is provided a method for fire alarm by using an air conditioner according to claim 1. In particular, the method includes:
detecting smoke concentration in a space where an indoor unit of the air conditioner is located;
when a second specified condition is satisfied, controlling the air conditioner to start a second mode to perform an alarm prompt; and
when a first specified condition is satisfied, controlling the air conditioner to start a first mode to perform a warning.

The controlling the air conditioner to start the first mode to perform the warning includes:
activating a first alarm sound mode and sending warning information to a server, so that the server forwards the warning information to a terminal device of a user.

Optionally, the warning information includes smoke concentration information.

The controlling the air conditioner to start the second mode to perform the alarm prompt includes:
activating a second alarm sound mode and sending alarm prompt information to a server, so that the server forwards the alarm prompt information to a terminal device of a user to prompt the user to perform a fire alarm.
the alarm prompt information includes smoke concentration information, or smoke concentration information and alarm mode information.

According to a second aspect of the invention, there is provided an air conditioner according to claim 2. In particular, the air conditioner includes an indoor unit and a microprocessor, wherein the indoor unit is provided with a smoke detector, the microprocessor including:
an information transceiving unit configured to receive or send information, wherein the received information includes smoke concentration information detected by the smoke detector, and the sent information includes warning information and alarm prompt information; and
an information processing unit configured to control the air conditioner to start a second mode to perform an alarm prompt when a second specified condition is satisfied, and control the air conditioner to start a first mode to perform a warning when a first specified condition is satisfied.

The information processing unit includes a warning unit configured to activate a first alarm sound mode and send warning information to a server through the information transceiving unit, so that the server forwards the warning information to a terminal device of a user.

Optionally, the warning information includes smoke concentration information.

The information processing unit includes an alarm prompt unit configured to activate a second alarm sound mode and send alarm prompt information to a server through the information transceiving unit, so that the server forwards the alarm prompt information to a terminal device of a user to prompt the user to perform a fire alarm.

The alarm prompt information includes smoke concentration information, or smoke concentration information and alarm mode information.

Some technical solutions provided by the present invention may achieve the following technical effects:

In the present invention, the air conditioner includes the indoor unit and the microprocessor, wherein the indoor unit is provided with the smoke detector for detecting smoke concentration in the space where the indoor unit of the air conditioner is located, and the microprocessor includes the information transceiving unit and the information processing unit, wherein the information transceiving unit is configured to receive or send information, wherein the received information includes smoke concentration information detected by the smoke detector, and the sent information includes warning information and alarm prompt information, when the detected smoke concentration satisfies the first specified condition, the air conditioner is controlled to perform the warning according to the first mode; and when the second specified condition is satisfied, the air conditioner is controlled to perform the alarm prompt according to the second mode. The technical solution can distinguish alarm modes according to the specific situation of the fire, and has strong pertinence.

It should be understood that the following detailed description is exemplary and explanatory only and is not intended to limit the present invention which is defined in the claims.

### BRIEF DESCRIPTION OF THE DRAWINGS

The accompanying drawings, which are incorporated in and constitute a part of this description, illustrate embodiments consistent with the present invention and, together with the description, serve to explain the principles of the present invention.
Fig. 1 is a flowchart illustrating a method for fire alarm by using an air conditioner according to an exemplary embodiment of the invention.
Fig. 2 is a flowchart illustrating a method for fire alarm by using an air conditioner according to an exemplary embodiment of the invention.
Fig. 3 is a schematic structural diagram illustrating an air conditioner according to an exemplary embodiment of the invention.

Description of reference signs: 1. air conditioner; 11. indoor unit; 111. smoke detector; 12. microprocessor; 121. information transceiving unit; 122. information processing unit.

### DETAILED DESCRIPTION

The following description and accompanying drawings fully illustrate the specific implementation solutions of the present invention so that a person skilled in the art can practice them. The embodiments merely represent possible ways to carry out the invention.

As used herein, terms such as "first" and "second" are merely for distinguishing one entity or operation from another entity or operation and do not require or imply any actual relationship or sequence among these entities or operations. Moreover, terms such as "comprise" and "include" or any other variants indicate a non-exclusive inclusion, so that a process, method or device including a series of elements not only include these elements, but also include other elements not explicitly listed. As used herein, each embodiment is described progressively, and contents focally described in each embodiment are different from those in other embodiments. The same or similar parts among each of the embodiments may be referred to each other. Regarding a structure, a product and the like disclosed in the embodiments, since they are corresponding to parts disclosed in the embodiments, their description is relatively simple and relevant contents can be referred to the description in the method part.

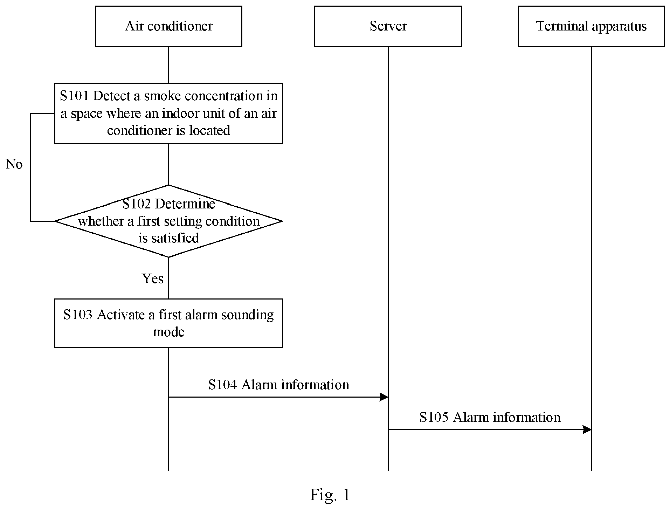

The embodiments of the present invention provide a method for fire alarm by using an air conditioner. As shown in Fig. 1, the method includes: smoke concentration in a space where an indoor unit of the air conditioner is located is detected (step S101);
whether a first specified condition is satisfied is determined (step S102), when the first specified condition is satisfied, the air conditioner is controlled to start a first mode to perform a warning, which includes: a first alarm sound mode is activated (step S103) and warning information is sent to a server (step S104), so that the server forwards the warning information to a terminal device of a user (step S 105).

In some embodiments, the sequence in which the first alarm sound mode is activated (step S103) and the warning information is sent to the server (step S104) is not limited, and both of which can occur simultaneously.

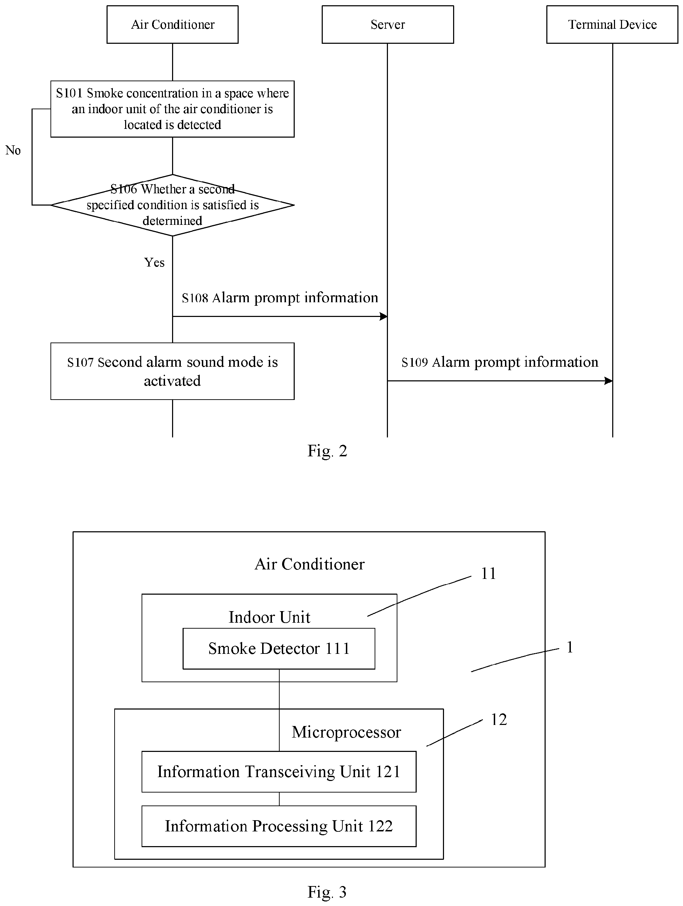

The embodiments of the present invention provide a method for fire alarm by using an air conditioner. As shown in Fig. 2, the method includes: smoke concentration in a space where an indoor unit of the air conditioner is located is detected (step S101);
whether a second specified condition is satisfied is determined (step S106), when the second specified condition is satisfied, the air conditioner is controlled to start a second mode to perform an alarm prompt, which includes: a second alarm sound mode is activated (step S107) and alarm prompt information is sent to a server (step S108), so that the server forwards the alarm prompt information to a terminal device of a user (step S109), to prompt the user to perform a fire alarm.

In some embodiments, the sequence in which the second alarm sound mode is activated (step S107) and the alarm prompt information is sent to the server (step S108) is not limited, and both of which can occur simultaneously.

According to the invention, the alarm prompt information includes smoke concentration information, or smoke concentration information and alarm mode information.

In some optional embodiments, the warning information includes smoke concentration information.

In some optional embodiments, the smoke concentration information includes volume concentration or mass volume concentration, and the unit of which is ml/m³ or mg/m³, respectively.

In some optional embodiments, when the second specified condition is satisfied, the method further includes: the air conditioner is controlled to perform the fire alarm in a specified manner. Optionally, a specified telephone number (fire alarm telephone 119) is called and a preset alarm voice is used to perform an alarm. For example, the preset alarm voice can be "Fire in position XX, please rescue".

In some optional embodiments, the warning information includes installation location information of the air conditioner, which includes an administrative area, a cell, a floor, a room number, and the like, for example, Room 502, 5th floor, Beili Community, Liuliqiao, Fengtai District, Beijing.

In other optional embodiments, the alarm prompt information includes installation location information of the air conditioner, which includes an administrative area, a cell, a floor, a room number, and the like, for example, Room 502, 5th floor, Beili Community, Liuliqiao, Fengtai District, Beijing.

In some optional embodiments, the first specified condition includes: the smoke concentration is greater than zero and less than a first specified value; or, a duration that the smoke concentration is greater than zero and less than the first specified value is greater than a first specified period of time.

Assuming that the first specified value is 8 ml/m³, and the first specified period of time is 300 seconds, if the smoke concentration is 5 ml/m³, the first specified condition is satisfied; if the duration is 320 seconds, the first specified condition is satisfied; and if the duration is 240 seconds, the first specified condition is not satisfied.

In some optional embodiments, when the first specified condition is satisfied, the user can use fire fighting equipment to extinguish the fire by himself/herself.

In some optional embodiments, the second specified condition includes: the smoke concentration is greater than a second specified value; or, a duration that the smoke concentration is greater than the second specified value is greater than a second specified period of time.

Assuming that the second specified value is 8 ml/m³, and the second specified period of time is 300 seconds, if the smoke concentration is 10 ml/m³, the second specified condition is satisfied; if the duration is 320 seconds, the second specified condition is satisfied; and if the duration is 200 seconds, the second specified condition is not satisfied.

In some optional embodiments, when the second specified condition is satisfied, the user needs to evacuate a fire site as soon as possible, and the fire must be extinguished by professional fire fighting forces.

The first specified value and the second specified value are different.

In some optional embodiments, the first specified value and the second specified value can select the same smoke concentration, for example, both the first specified value and the second specified value are 8 ml/m³.

In some optional embodiments, the first specified value and the second specified value can also select different smoke concentrations, for example, the first specified value is 8 ml/m³, and the second specified value is 15 ml/m³.

In some optional embodiments, the first specified value and the second specified value can be set reasonably and appropriately by a professional.

In some optional embodiments, the first specified period of time and the second specified period of time can be the same or different.

In some optional embodiments, the first specified period and the second specified period can be the same, for example, both the first specified period and the second specified period can be set to 300 seconds.

In some optional embodiments, the first specified period and the second specified period can be different, for example, the first specified period can be set to 200 seconds, and the second specified period can be set to 400 seconds.

In some optional embodiments, the smoke concentration includes the volume concentration, for example, the first specified value is 4 ml/m³, and the first specified period of time is 180 seconds; and the second specified value is 6 ml/m³, and the second specified period of time is 180 seconds.

In some optional embodiments, the smoke concentration includes the mass volume concentration, for example, the first specified value is 50 mg/m³, and the first specified period of time is 100 seconds; and the second specified value is 60 mg/m³, and the second specified period of time is 150 seconds.

The embodiments of the present invention provide an air conditioner. As shown in Fig. 3, the air conditioner 1 includes an indoor unit 11 and a microprocessor 12, wherein the indoor unit 11 is provided with a smoke detector 111, and the microprocessor 12 includes:
an information transceiving unit 121 configured to receive or send information, wherein the received information includes smoke concentration information detected by the smoke detector, and the sent information includes warning information and alarm prompt information; and
an information processing unit 122 configured to control the air conditioner to start a second mode to perform an alarm prompt when a second specified condition is satisfied, and control the air conditioner to start a first mode to perform a warning when a first specified condition is satisfied.

According to the invention, the information processing unit 122 includes a warning unit configured to activate a first alarm sound mode and send warning information to a server through the information transceiving unit, so that the server forwards the warning information to a terminal device of a user.

In some optional embodiments, the warning information includes smoke concentration information.

In some optional embodiments, the smoke concentration information includes volume concentration or mass volume concentration, and the unit of which is ml/m³ or mg/m³, respectively.

According to the invention, the information processing unit 122 includes an alarm prompt unit configured to activate a second alarm sound mode and send alarm prompt information to a server through the information transceiving unit, so that the server forwards the alarm prompt information to a terminal device of a user to prompt the user to perform a fire alarm.

According to the invention, the alarm prompt information includes smoke concentration information, or smoke concentration information and alarm mode information.

In some optional embodiments, the smoke concentration information includes volume concentration or mass volume concentration, and the unit of which is ml/m³ or mg/m³, respectively.

In some optional embodiments, the information processing unit 122 is further configured to control the air conditioner to perform the fire alarm in a specified manner when the second specified condition is satisfied. Optionally, the information processing unit includes a dialed call unit configured to call a specified telephone number (fire alarm telephone 119) and use a preset alarm voice to perform an alarm. For example, the preset alarm voice can be "Fire in position XX, please rescue".

In some optional embodiments, considering the problem of power supply in case of fire, the air conditioner 1 further includes a back-up power supply capable of independently supplying power to the microprocessor. For example, a battery base can be added to the indoor unit of the air conditioner, and a button battery can be added as the back-up power supply to independently supply power to the microprocessor 12 and/or the smoke detector 111 of the air conditioner. In this way, even after the power supply trips in case of fire, the microprocessor 12 and/or the smoke detector 111 can still operate and send the alarm prompt information and/or the warning information without affecting the alarm and information prompt.

In some optional embodiments, the warning information includes installation location information of the air conditioner, which includes an administrative area, a cell, a floor, a room number, and the like, for example, Room 502, 5th floor, Beili Community, Liuliqiao, Fengtai District, Beijing.

In other optional embodiments, the alarm prompt information includes installation location information of the air conditioner, which includes an administrative area, a cell, a floor, a room number, and the like, for example, Room 502, 5th floor, Beili Community, Liuliqiao, Fengtai District, Beijing.

In some optional embodiments, the first specified condition includes: the smoke concentration is greater than zero and less than a first specified value; or, a duration that the smoke concentration is greater than zero and less than the first specified value is greater than a first specified period of time.

It is assumed that the first specified value is 4 ml/m³, and the first specified period of time is 800 seconds. If the smoke concentration is 3 ml/m³, the first specified condition is satisfied; if the duration is 320 seconds, the first specified condition is not satisfied; and if the duration is 900 seconds, the first specified condition is satisfied.

In some optional embodiments, the second specified condition includes: the smoke concentration is greater than a second specified value; or, a duration that the smoke concentration is greater than the second specified value is greater than a second specified period of time.

It is assumed that the second specified value is 20 ml/m³, and the second specified period of time is 700 seconds. If the smoke concentration is 32 ml/m³, the second specified condition is satisfied; if the duration is 690 seconds, the second specified condition is not satisfied; and if the duration is 760 seconds, the second specified condition is satisfied.

The first specified value and the second specified value are different.

In some optional embodiments, the first specified period of time and the second specified period of time can be the same or different.

## Claims

1. A method for fire alarm by using an air conditioner (1), comprising:
detecting (S101) smoke concentration in a space where an indoor unit (11) of the air conditioner (1) is located;
when a second specified condition is satisfied, controlling the air conditioner (1) to start a second mode to perform an alarm prompt; and
when a first specified condition is satisfied, controlling the air conditioner (1) to start a first mode to perform a warning
wherein the controlling the air conditioner (1) to start the first mode to perform the warning comprises:
activating (S103) a first alarm sound mode and sending (S104) warning information to a server, so that the server forwards (S105) the warning information to a terminal device of a user.
wherein the controlling the air conditioner (1) to start the second mode to perform the alarm prompt comprises:
activating (S107) a second alarm sound mode and sending (S108) alarm prompt information to a server, so that the server forwards (S109) the alarm prompt information to a terminal device of a user to prompt the user to perform a fire alarm;
wherein the alarm prompt information comprises smoke concentration information, or smoke concentration information and alarm mode information.

2. An air conditioner (1), comprising an indoor unit (11) and a microprocessor (12), wherein the indoor unit (11) is provided with a smoke detector (111), the microprocessor (12) comprising:
an information transceiving unit (121) configured to receive or send information, wherein the received information comprises smoke concentration information detected by the smoke detector (111), and the sent information comprises warning information and alarm prompt information; and
an information processing unit (122) configured to control the air conditioner (1) to start a second mode to perform an alarm prompt when a second specified condition is satisfied, and control the air conditioner (1) to start a first mode to perform a warning when a first specified condition is satisfied
wherein the information processing unit (122) comprises a warning unit configured
- to activate a first alarm sound mode and send warning information to a server through the information transceiving unit (121), so that the server forwards the warning information to a terminal device of a user
wherein the information processing unit (122) comprises an alarm prompt unit configured
- to activate a second alarm sound mode and send alarm prompt information to a server through the information transceiving unit (121), so that the server forwards the alarm prompt information to a terminal device of a user to prompt the user to perform a fire alarm;
wherein the alarm prompt information comprises smoke concentration information, or smoke concentration information and alarm mode information.

## Patentansprüche

1. Verfahren zur Brandmeldung mittels einer Klimaanlage (1), das umfasst:
Detektieren (S101) einer Rauchkonzentration in einem Raum, in dem sich eine Indoor-Einheit (11) der Klimaanlage (1) befindet;
wenn eine zweite bestimmte Bedingung erfüllt wird, Steuern der Klimaanlage (1), so dass diese einen zweiten Modus startet, um eine Alarmaufforderung durchzuführen; und
wenn eine erste bestimmte Bedingung erfüllt wird, Steuern der Klimaanlage (1), so dass diese einen ersten Modus startet, um eine Warnung durchzuführen,
wobei das Steuern der Klimaanlage (1), so dass diese einen ersten Modus zum Durchführen der Warnung startet, umfasst:
Aktivieren (S103) eines ersten Alarmtonmodus, und Senden (S104) von Warninformationen an einen Server, so dass der Server die Warninformationen an ein Endgerät eines Benutzers weiterleitet (S105),
wobei das Steuern der Klimaanlage (1), so dass diese den zweiten Modus zum Durchführen der Alarmaufforderung startet, umfasst:
Aktivieren (S107) eines zweiten Alarmtonmodus und Senden (S018) von Alarmaufforderungsinformationen an einen Server, so dass der Server die Alarmaufforderungsinformationen an ein Endgerät eines Benutzers weiterleitet (S109), um den Benutzer aufzufordern, einen Feueralarm auszulösen;
wobei die Alarmaufforderungsinformationen Rauchkonzentrationsinformationen oder Rauchkonzentrationsinformationen und Alarmmodusinformationen umfassen.

2. Klimaanlage (1), die eine Indoor-Einheit (11) und einen Mikroprozessor (12) aufweist, wobei die Indoor-Einheit (11) mit einem Rauchdetektor (111) vorgesehen ist, wobei der Mikroprozessor (12) aufweist:
eine Informationssende- und -empfangseinheit (121), die dazu ausgebildet ist, Informationen zu empfangen oder zu senden, wobei die empfangenen Informationen von dem Rauchdetektor (111) detektierte Rauchkonzentrationsinformationen umfassen, und wobei die gesendeten Informationen Warninformationen und Alarmaufforderungsinformationen umfassen; und
eine Informationsverarbeitungseinheit (122), die dazu ausgebildet ist, die Klimaanlage (1) so zu steuern, dass sie einen zweiten Modus startet, um eine Alarmaufforderung durchzuführen, wenn eine zweite bestimmte Bedingung erfüllt wird, und die Klimaanlage (1) so zu steuern, dass sie einen ersten Modus startet, um eine Warnung durchzuführen, wenn eine erste bestimmte Bedingung erfüllt wird,
wobei die Informationsverarbeitungseinheit (122) eine Warneinheit aufweist, die für Folgendes ausgebildet ist:
- Aktivieren eines ersten Alarmtonmodus und Senden von Warninformationen an einen Server über die Informationssende- und -empfangseinheit (121), so dass der Server die Warninformationen an ein Endgerät eines Benutzers weiterleitet
wobei die Informationsverarbeitungseinheit (122) eine Alarmaufforderungseinheit aufweist, die für Folgendes ausgebildet ist:
- Aktivieren eines zweiten Alarmtonmodus und Senden der Alarmaufforderungsinformationen an einen Server über die Informationssende- und -empfangseinheit (121), so dass der Server die Alarmaufforderungsinformationen an ein Endgerät eines Benutzers weiterleitet, um den Benutzer aufzufordern, einen Feueralarm auszulösen;
wobei die Alarmaufforderungsinformationen Rauchkonzentrationsinformationen oder Rauchkonzentrationsinformationen und Alarmmodusinformationen umfassen.

## Revendications

1. Procédé d'alarme-incendie à l'aide d'un conditionneur d'air (1), comprenant :
la détection (S101) d'une concentration de fumée dans un espace où se trouve une section intérieure (11) du conditionneur d'air (1) ;
lorsqu'une seconde condition spécifiée est satisfaite, la commande du conditionneur d'air (1) afin de démarrer un second mode pour effectuer une invite d'alarme ; et
lorsqu'une première condition spécifiée est satisfaite, la commande du conditionneur d'air (1) afin de démarrer un premier mode pour effectuer un avertissement
dans lequel la commande du conditionneur d'air (1) afin de démarrer un premier mode pour effectuer l'avertissement comprend :
l'activation (S103) d'un premier mode sonore d'alarme et l'envoi (S104) d'informations d'avertissement à un serveur, de sorte que le serveur transmet (S105) les informations d'avertissement à un dispositif terminal d'un utilisateur.
dans lequel la commande du conditionneur d'air (1) afin de démarrer un second mode pour effectuer l'invite d'alarme comprend :
l'activation (S107) d'un second mode sonore d'alarme et l'envoi (S108) d'informations d'invite d'alarme à un serveur, de sorte que le serveur transmet (S109) les informations d'invite d'alarme à un dispositif terminal d'un utilisateur afin d'inviter l'utilisateur à effectuer une alarme-incendie ;
dans lequel les informations d'invite d'alarme comprend des informations de concentration de fumée, ou des informations de concentration de fumée et des informations de mode d'alarme.

2. Conditionneur d'air (1), comprenant une section intérieure (11) et un microprocesseur (12), dans lequel la section intérieure (11) est pourvue d'un détecteur de fumée (111), le microprocesseur (12) comprenant :
une unité de transmission-réception d'informations (121) configurée pour recevoir ou envoyer des informations, dans lequel les informations reçues comprennent des informations de concentration de fumée détectée par le détecteur de fumée (111), et les informations envoyée comprennent des informations d'avertissement et des informations d'invite d'alarme ; et
une unité de traitement d'informations (122) configurée pour commander le conditionneur d'air (1) afin de démarrer un second mode pour effectuer une invite d'alarme lorsqu'une seconde condition spécifiée est satisfaite, et commander le conditionneur d'air (1) afin de démarrer un premier mode pour effectuer un avertissement lorsqu'une première condition spécifiée est satisfaite
dans lequel l'unité de traitement d'informations (122) comprend une unité d'avertissement configurée
- pour activer un premier mode sonore d'alarme et envoyer des informations d'avertissement à un serveur par l'intermédiaire de l'unité de transmission-réception d'informations (121), de sorte que le serveur transmet les informations d'avertissement à un dispositif terminal d'un utilisateur
dans lequel l'unité de traitement d'informations (122) comprend une unité d'invite d'alarme configurée
- pour activer un second mode sonore d'alarme et envoyer des informations d'invite d'alarme à un serveur par l'intermédiaire de l'unité de transmission-réception d'informations (121), de sorte que le serveur transmet les informations d'invite d'alarme à un dispositif terminal d'un utilisateur afin d'inviter l'utilisateur à effectuer une alarme-incendie ;
dans lequel les informations d'invite d'alarme comprend des informations de concentration de fumée, ou des informations de concentration de fumée et des informations de mode d'alarme.
